# EUROPÄISCHE PATENTANMELDUNG

(11) **EP 1 317 075 A2**
(43) Veröffentlichungstag der Anmeldung: **04.06.2003**
(21) Anmeldenummer: 02450272.6
(22) Anmeldetag: 29.11.2002
(51) Int. Cl.: H04B 1/48

(54) **Verfahren und Kommunikationseinrichtung für die Ubertragung von Nachrichten**

(30) Priorität: 03.12.2001 AT 18922001
(71) Anmelder: FREQUENTIS NACHRICHTENTECHNIK GESELLSCHAFT m.b.H., 1120 Wien (AT)
(72) Erfinder: Sajatovic, Miodrag, 1120 Wien (AT)
(74) Vertreter: Wildhack, Helmut, Dipl.-Ing. Dr.

(57) **Zusammenfassung**

Die Erfindung betrifft ein Verfahren und eine Kommunikationseinrichtung für die Übertragung von Nachrichten zwischen einem Sender und einem Empfänger, zwischen auf Flugzeugen und in Bodenstationen befindlichen Sendern und Empfängern, wobei im Sender die Sprachdaten einer Sprachaufnahmeeinheit als AF-Signal erstellt und, DSB-AM moduliert, von einer Sendeeinheit als RF-Signal abgesendet werden, wobei das Absenden einer Nachricht durch Aktivieren einer PTT-Taste eingeleitet wird und wobei im Empfänger eine Demodulation des empfangenen RF-Signals und eine Auswertung des AF-Signals erfolgt. Erfindungsgemäß ist vorgesehen,
- dass zur Erzielung einer mit der Übertragung der Sprachdaten gemeinsamen Übertragung von weiteren Daten im Sender eine Verknüpfung der zum Absenden vorgesehenen Sprachdaten mit den weiteren zu übertragenden Daten erfolgt,
- dass ein vorgegebener Teilbereich des AF-Sprachspektrums unterdrückt bzw. beseitigt, mit einer Bandsperre, beseitigt wird und
- dass die zu übertragenden weiteren, gespeichert vorliegenden, Daten in den frei gemachten Teil des AF-Sprachspektrums eingebettet und gemeinsam mit den Sprachdaten abgesendet werden.

## Beschreibung

Die Erfindung betrifft ein Verfahren gemäß dem Oberbegriff des Patentanspruches 1 sowie eine Kommunikationseinrichtung gemäß dem Oberbegriff des Patentanspruches 7.

Kommunikationseinrichtungen der erfindungsgemäßen Art werden vor allem für die Übertragung von Nachrichten zwischen Flugkörpern und Bodenstationen eingesetzt; eine derartige Kommunikation ist für Flugzeuge, unabhängig von ihrer Größe, und auch Hubschrauber, vorgesehen.

Derzeit verwendet man Bord-Boden Sprachfunk für die Flugsicherung (ATC) und Airline Operational Communications (AOC). Diese sicherheitskritischen Kommunikationen wurden in speziellen, geschützten Teilen des aeronautischen Spektrums implementiert (HF, VHF, UHF). Weltweit hat man für diesen Zweck die DSB-AM (dual side band amplitude-) Modulation ausgesucht.

Der Zugriff zu dem geteilten simplex R/T (radio telephony) Kommunikationskanal basiert heute auf der "hören-vor-dem-PTT Drücken"-Prozedur: die Kontroller und Piloten müssen durchs Mithören feststellen, dass der Funkkanal frei ist, bevor es ihnen erlaubt ist, selber den Kanal durchs Drücken der PTT-Taste zu "besetzen" und zu sprechen. Die Sprachdurchsage dauert normalerweise einige Sekunden.

Ziel der Erfindung ist es vor allem, ohne die sicherheitstechnische oder prozedurelle Komponente der derzeitigen Kommunikation zu beeinträchtigen, zusätzliche Daten zwischen einem Sender und einem Empfänger, insbesondere zwischen Flugkörpern und Bodenstationen übertragen zu können. Prinzipiell besteht die Möglichkeit, zusätzliche Sender und Empfänger sowohl am Flugkörper als auch bei den Bodenstationen anzuordnen; diese Möglichkeit bringt jedoch den Nachteil des relativ großen Aufwands und möglicher unerwünschten Wechselwirkung mit anderen Kommunikationsdiensten in dem ohnedies eng besetzten aeronautischen Frequenzbereich mit sich. Mit der Erfindung sollen ein Verfahren und eine Kommunikationseinrichtung zur Übertragung von Nachrichten erstellt werden, bei denen mit möglichst einfachem Aufbau eine sichere und rasche Datenübertragung gewährleistet ist; die Erfindung soll auch die Möglichkeit bieten, bestehende Systeme ohne allzu großen Aufwand umzurüsten.

Diese Ziele werden bei einem Verfahren der eingangs genannten Art mit den im Kennzeichen des Anspruches 1 angeführten Merkmalen erreicht. Eine Kommunikationseinrichtung gemäß der eingangs genannten Art ist durch die im Kennzeichen des Anspruches 7 angeführten Merkmale charakterisiert.

Der Sprachkanal für Bord-Boden R/T Funk-Kommunikationen hat die Audio-Frequenz (AF) Bandbreite von 3000 Hz (300 Hz- 3400 Hz). Innerhalb dieser Bandbreite ist das Sprachspektrum weder "flach", noch zeit-invariant: das Sprachspektrum ändert sich mit der Zeit, wobei es zwei typische "Spitzen" und ein "Tal" (bei etwa 2 kHz) gibt. Die wichtigste Sprachinformation ist rund um die benannten Spektralspitzen konzentriert, während in dem "Tal" der für die Qualität der Sprachübertragung eher entbehrliche Anteil liegt.

Mit der erfindungsgemäßen Vorgangsweise wird es besonders einfach möglich, in einem schmalbandigen Frequenzbereich innerhalb des aeronautischen R/T Kommunikationskanals gleichzeitig mit der Übertragung von Sprachdaten weitere Daten zu übertragen. Die Art der weiteren Daten ist beliebig; diese Daten können am Flugzeug und/oder der Bodenstation fix gespeicherte oder sich mit der Fortbewegung des Flugzeugs ändernde Daten sein. Vorteilhafterweise liegt der Frequenzbereich des zwecks Datenübertragung unterdrückten Teilbereichs des Sprachspektrums zwischen 1,5 bis 2,5 kHz, vorzugsweise 1,8 bis 2,3 kHz.

Die erfindungsgemäße Kommunikationseinrichtung ist für die allgemeine Übertragung von aeronautischen Daten zwischen dem Piloten und einer Bodenstation, z.B. dem Kontroller- bzw. Airline-Dispatcher oder einem automatischen Bodensystem, einsetzbar. An sich wäre es auch möglich, dass die übertragenen Daten dazu verwendet werden, einzelne Flugzeugsysteme vom Boden anzusprechen oder fern zu steuern oder eine gezielte Übernahme der Kontrolle vom Boden aus über einzelne Flugzeugkommunikationssysteme zu erreichen, womit die erfindungsgemäße Kommunikationseinrichtung Teil eines automatischen Bord Systems sein könnte, der auf die erfindungsgemäße Weise die Kommunikation mit der Bodenstation aufrecht erhält.

Die Erfindung bringt eine Reihe von Vorteilen mit sich, die über die sichere und rasche Übertragung von Nachrichten hinaus gehen.

Heute ist es unmöglich ein Flugzeug mit rein "technischen" Mitteln innerhalb des ATC Flugfunkssystems zu identifizieren bzw. zu authentizieren. Mit den geltenden Prozeduren wird die Identifizierung in der operationellen Ebene statt in der technischen Ebene durchgeführt, indem sich die Piloten und Kontroller zum Beginn der eigentlichen Sprachsession "vorstellen". Solche Identifizierung ist schwer zu verifizieren oder zum "tracking" des Flugzeuges zu verwenden (abgesehen von dem "tracking" im Kopf des Kontrollers). Ähnlicherweise gibt es keine technische Möglichkeit für den Piloten zu verifizieren bzw. zu authentizieren ob bzw. mit welchem Kontroller er gerade spricht. In der Folge können "Phantompiloten" und "Phantomkontroller" mit relativ primitiver Ausrüstung auf den Funkkanal zugreifen. Zum Glück werden sie oft als "Eindringlinge" erkannt: das passiert aber ohne jeder Systemunterstützung, dank der Erfahrung von Piloten bzw. Kontroller und deren Kenntnis einiger spezifischen Eigenschaften der "ATC Sprache".

Erfindungsgemäß kann vorgesehen sein, den ICAO 24-Bit code (eindeutige Identifizierung eines jeden Flugzeuges), vorzugsweise bei jeder PTT Aktivierung (seitens des Piloten) automatisch auszusenden. Damit bekämen der Kontroller, sowie das ATC Bodensystem die wertvolle Information über die Identität des Flugzeuges automatisch auch von einem Borddatensystem, statt wie bisher nur mündlich von dem Piloten oder anderen mitfliegenden Personen, womit das "Phantompilotproblem" durch automatische Verifizierung der sprechenden Partei reduziert werden könnte.

In der Gegenrichtung könnte jeder ATC Bodensender einen eindeutigen Identifizierungscode in jede uplink Aussendung einsetzen, wodurch der Pilot eine "echte" Sendung von der eines "Phantomcontrollers" (ohne diesen code) leicht unterscheiden könnte.

Zusätzlich zur Flugzeug-/Bodensender Identifizierung, könnte die erfindungsgemäße Vorgangsweise verwendet werden, um beliebige Kurzinformation in der uplink/downlink Richtung zu übertragen, vorausgesetzt dass die Information so formatiert werden kann, damit sie in ein kurzes "Squitter" mit der vordefinierten Länge hineinpasst. Als mögliche weitere Anwendungen könnten beispielsweise Uplink Anweisungen betreffend die Flugroute bzw. deren Überwachung zum Piloten übertragen werden.

Derartige Anweisungen werden derzeit per Sprache abgewickelt und manche davon von den Kontrollern als langweillige Routine angesehen. Als Alternative könnte der Kontroller das Zielflugzeug sowie dessen "nächste R/T Frequenz" vor der Sprachsendung selektieren und die PTT-Taste kurz drücken, sodaß die Anweisung in dem erfindungsgemäß erstellten "in-band Datenkanal" ausgesendet (und eventuell auch von dem Piloten bestätigt) wird, parallel zu, oder sogar anstatt der Sprachanweisung.

Sofern die Verknüpfungseinheit bzw. das bordseitige "in-band System" mit dem Bord-Navigationssystem gekoppelt wird, ist es möglich, die onboard-berechnete Flugzeugposition als in-band Automatic Dependent Surveillance (ADS) Bericht mit jeder PTT-Aktivierung dem Bodensystem mitzuteilen. Diese Information könnte (besonders in der Flughafen-Umgebung) dem Bodensystem als eine zusätzliche Quelle der surveillance Information nützlich sein.

Für die General Aviation (GA) auf unkontrollierten oder unbemannten Flugfeldern wäre es nützlich, mit der erfindungsgemäßen Vorgangsweise eine spezifische Aktion des Bodensystems beantragen oder hervorrufen zu können. Ein Beispiel dafür ist die automatische Aktivierung des ATIS Senders oder der Pistenbefeuerung.

Piloten, die AOC Sprachfrequenzen verwenden, haben oft Bedarf, aber derzeit kaum eine systemunterstützte Möglichkeit, vor der eigentlichen Sprachaussendung zwischen einigen AOC Bodeneinheiten (Wartung, Dispatchers, Crew) zu "wählen", um zu verhindern, dass ihre Aussendung nicht adressierte Einheiten "stört". Eine solche systemunterstützte Downlink Adressierung des Bodenansprechpartners über die AOC Frequenz kann erfindungsgemäß mit vorkonfigurierten in-band "Adressen-Messages" erreicht werden, die in die downlink squitters vor der PTT-Aktivierung eingesetzt werden.

Vorteilhafte Ausführungsformen der Erfindung ergeben sich aus der folgenden Beschreibung, den Patentansprüchen und den Zeichnungen.

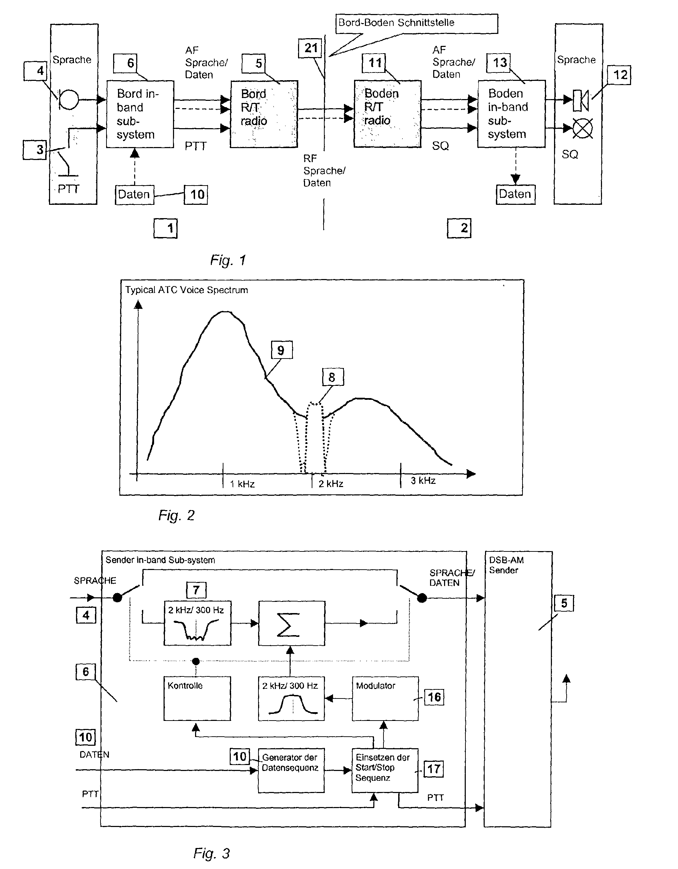

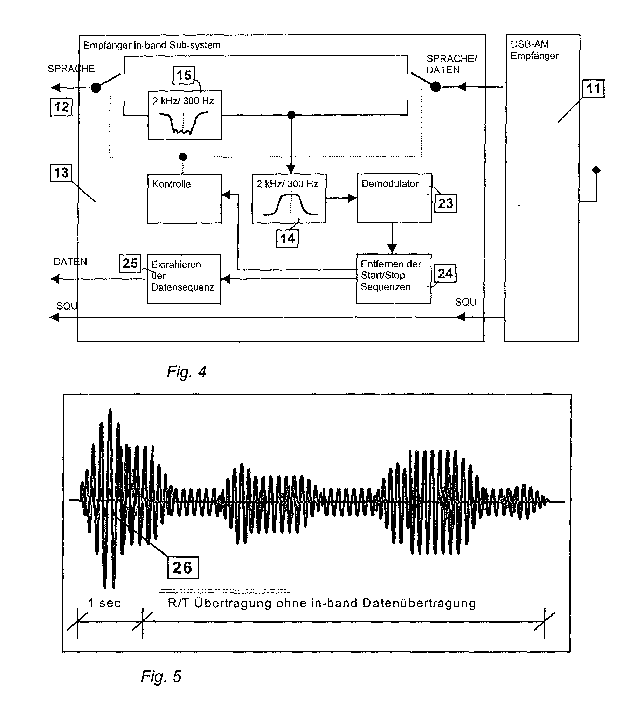

Fig. 1 zeigt einen schematischen Aufbau der erfindungsgemäßen Kommunikationseinrichtung bzw. das Prinzip des "in-band-Modems", Fig. 2 zeigt ein AF-Spektrum mit dem in-band-Modemsignal bzw. mit dem in einem ausgeblendeten Teilbereich des AF-Spektrums eingesetzten modulierten Datenträger. Fig. 3 zeigt die senderseitige Ausbildung der erfindungsgemäßen Kommunikationseinrichtung (in-band Sub-system-Senderteil), Fig. 4 zeigt die empfängerseitige Ausbildung der erfindungsgemäßen Kommunikationseinrichtung (in-band Sub-system-Empfängerteil). Fig. 5 zeigt das mit der erfindungsgemäßen Kommunikationseinrichtung übertragene AF-Signal mit dem eingebetteten Signal, welches die weiteren Daten überträgt bzw. das Sprachsignal mit dem in-band Modemsignal.

Fig. 1 zeigt schematisch und prinzipiell die erfindungsgemäße Vorgangsweise zur Übertragung von Nachrichten zwischen einem Sender 1 und einem Empfänger 2, zwischen denen derzeit nur eine Übertragung von Sprachdaten stattfindet. In dem Sender 1, der sich auf einem Flugzeug oder in einer Bodenstation befinden kann, ist eine Sprachaufnahmeeinheit 4, z.B. ein Mikrofon, vorgesehen. Nach Drücken einer PTT-Taste 3 wird von einer Sendeeinheit 5 eine Übertragung bzw. das Absenden eines RF-Signals eingeleitet, das die aufgegebenen Sprachdaten enthält. Erfindungsgemäß ist nunmehr zwischen die Sprachaufnahmeeinheit 4 und die Sendeeinheit 5 eine Verknüpfungseinheit 6, auch bezeichnet als "in-band-sub-System", zwischengeschaltet. Es ist vorgesehen, dass die Verknüpfungseinheit 6 eine Bandsperre 7 aufweist, mit der insbesondere mit dem Zeitpunkt oder innerhalb einer vorgegebenen Zeitspanne nach der Aktivierung der PTT-Taste 3 ein vorgegebener Teilbereich 8 des AF-Sprachspektrums 9 beseitigbar ist und dass die Verknüpfungseinheit 6 einen Datenspeicher oder -generator 10 für die zu übertragenden weiteren Daten aufweist, diese weiteren Daten in einen vom AF-Sprachspektrum frei gemachten Teilbereich 8 des AF-Sprachspektrums 9 einbettet und das mit den weiteren Daten ergänzte AF-Sprachspektrum der Sendeeinheit 5 weiterleitet.

Die für die weiteren Daten freigehaltene Bandbreite im AF-Sprachspektrum 9 beträgt etwa 300 Hz. Auch wenn es günstig ist, die Mittenfrequenz der Signalfrequenz des Teilbereiches 8 bei etwa 2 kHz anzuordnen (da in diesem Bereich enthaltene Sprachinformation der Sprachverständlichkeit am geringsten beiträgt), ist es ebenso möglich, den zu entfernenden Teilbereich 8 in einem beliebigen anderen Teil des Audiospektrums (z.B. oberhalb 2,5 kHz) zu implementieren.

In Fig. 2 erkennt man ein typisches ATC voice-Spektrum 9, aus dem im Bereich bei etwa 2 kHz ein Teilbereich 8 ausgeblendet wurde. Dieser Teilbereich 8 des Sprachspektrums 9 wurde mit einem Signal aufgefüllt. Das "in-band-sub-System" erfüllt eine Funktion ähnlich der eines Modems. Wie in Fig. 5 dargestellt, erfolgt eine R/T Übertragung bzw. RF-Signalübertragung der Sprachdaten, wobei die zusätzlich zu übertragenden weiteren Daten 26 in diese Übertragung, wie links in Fig. 5 ersichtlich, eingebettet sind.

Sowohl für die Übertragung von einem Flugzeug zur Bodenstation, als auch von einer Bodenstation zum Flugzeug, ist die gleiche erfindungsgemäße Vorgangsweise anwendbar. Des weiteren zeigt sich aus Fig. 1, dass es zur Implementierung der erfindungsgemäßen Vorgangsweise im Sender lediglich erforderlich ist, zwischen die Sprachaufnahmeeinheit und die Sendeeinheit eine Verknüpfungseinheit einzufügen bzw. es im Empfänger erforderlich ist, zwischen eine Empfangseinheit 11 und eine Sprachwiedergabeeinheit 12 eine Entnahmeeinheit 13 anzuordnen, so wie dies ebenfalls aus Fig. 1 ersichtlich ist.

Mit 21 ist in Fig. 1 schematisch das Übertragungsmedium für die RF-Signale bzw. die Schnittstelle zwischen dem Sender 1 und dem Empfänger 2 dargestellt.

Fig. 3 und 4 dienen zur Erläuterung der erfindungsgemäßen Vorgangsweise. Nachdem der Pilot die PTT-Taste 3 aktiviert hat, erkennt die Verknüpfungseinheit 6 dieses Signal, benützt dieses Signal, um die Übertragung der weiteren Daten einzuleiten, und leitet es an die Sendeeinheit 5 weiter. In der Verknüpfungseinheit 6 wird ein Teil des AF(Piloten)-Sprachspektrums 9 mit einer Bandsperre 7, insbesondere im Bereich von 2 kHz, beseitigt bzw. unterdrückt, insbesondere unabhängig davon, ob der Pilot gerade spricht oder nicht. Gleichzeitig werden die, vorteilhafterweise bereits gespeichert vorliegenden, weiteren Daten der Verknüpfungseinheit 6 zugeführt oder in einem Generator generiert, einer entsprechenden Trägerfrequenz aufmoduliert und in Form eines Modemsignals in den "freigemachten" Teilbereich 8 des AF-Spektrums eingefügt und gemeinsam mit den Sprachdaten der Sendeeinheit 5 aufgegeben.

Die aufzugebenden weiteren Daten können in einem Datenspeicher 10 gespeichert vorliegen oder werden von einem Generator 10 zum rechtzeitigen Zeitpunkt generiert. In einer Einheit 17 können die weiteren Daten mit Start- und Stopsequenzen bzw. weitere für die Übertragung der weiteren Daten notwendigen Steuer-, Signalisierungs- bzw. Synchronisierungsdaten versehen werden. In einem Datenmodulator 16 werden die weiteren Daten der Trägerfrequenz aufmoduliert und dieses Signal in das AF-Spektrum eingefügt.

Das zusammengesetzte AF-Signal mit den eingebetteten weiteren Daten wird in der Sendeeinheit 5 DSB-AM moduliert und ausgesendet. Daraus resultierendes DSB-AM RF-Signal wird von der Empfangseinheit 11 aufgenommen, welche das DSB-AM Signal verarbeitet. Gleichzeitig kann die Empfangseinheit 11 ein SQ (Squelch break) Signal erstellen und das demodulierte AF-Signal mit dem "in-band-" Modemsignal an die Entnahmeeinheit 13 weiterleiten.

In dem Empfänger 2 wird in der Entnahmeeinheit 13 mit einem entsprechend bemessenen Bandpass-Filter 14 aus dem zusammengesetzten AF-Signal das Modemsignal ausgefiltert. Eine entsprechende Demodulation findet in einem Datendemodulator 23 statt. Stop- und Startsequenzen werden in einer Einheit 24 entfernt, die interessierenden weiteren Daten in einer Einheit 25 extrahiert und an den an die Empfangseinheit 13 angeschlossenen Datenuser weitergeleitet.

Vorteilhafterweise wird gleichzeitig das Trägersignal für die weiteren Daten mit einer Bandsperre 15 aus dem AF-Signal ausgefiltert, sodass dieser Teilbereich des Signals nicht mehr hörbar ist. Das zusammengesetzte AF-Signal, das die Sprachdaten und weitere Daten enthält, wird - um diesen Teilbereich 8 des Sprachspektrums verringert - zur Sprachwiedergabeeinheit 12 weitergeleitet.

Um das Senden der weiteren Daten streng mit der Absendung der RF-Signale bzw. mit den Vorschriften im Flugfunkverkehr zu korrelieren, wird die Aufgabe der weiteren Daten auf das RF-Signal strikt mit der Zugriffsprozedur für aeronautische Sprachkommunikation, d.h. strikt an die Aktivierung der PTT-Taste 3 gekoppelt.

Erfindungsgemäß ist vorgesehen, dass die Aussendung der weiteren Daten zusammen mit der Aussendung der Sprachdaten erfolgen soll. Dies bedeutet, dass erst mit oder nach Aktivierung der PTT-Taste 3 eine Aussendung der weiteren Daten erfolgen kann. Dabei ist es besonders vorteilhaft, wenn die Aktivierung der PTT-Taste 3, unabhängig von ihrer tatsächlichen Betätigung durch die Bedienungsperson, für eine gewisse einstellbare Mindestzeitdauer aufrechterhalten wird, um sicherzugehen, dass der Block der zur Übertragung vorgesehenen weiteren Daten auch übertragen wird. Vorteilhafterweise werden die zur Übertragung vorgesehenen weiteren Daten auf Blöcke beschränkt bzw. wird für die Übertragung der weiteren Daten eine einstellbare Zeitspanne vorgesehen, die für die Übertragung von einem kurzen "Daten-squitter" ausreicht. Die vorteilhafterweise einstellbare Mindestzeitspanne für die Aufrechterhaltung der RF-Aussendung nach Aktivierung der PTT-Taste 3 sollte somit die Höchstdauer des "Daten-squitter" übersteigen. Die Verknüpfungseinheit 6 ist dazu eingereichtet, dass PTT-Signal, falls notwendig, für die einstellbare, vorgegebene Zeitspanne aufrecht zu erhalten, um zu verhindern, dass die Sendeeinheit 5 von den sprechenden Bedienungspersonen durch Inaktivierung der PTT-Taste 3 deaktiviert wird, bevor die Aussendung der weiteren Daten beendet wurde. Vorteilhafterweise beträgt die Zeitspanne für derartige "Daten-squitter" 0,5 bis 1,5, insbesondere etwa 1 sec. Nach Ablauf dieser für die Übertragung eines Daten-squitter vorgesehenen Zeitspanne wird die Verknüpfungseinheit 6 deaktiviert und es erfolgt ausschließlich eine Übertragung der Sprachdaten, wie dies im herkömmlichen Nachrichtenaustausch zwischen Flugzeugen und Bodenstationen bzw. umgekehrt, üblich ist.

Es kann vorteilhafterweise vorgesehen sein, dass die Unterdrückung des Teilbereiches ständig oder nach Drücken der PTT-Taste für eine vorgegebene Zeitspanne erfolgt.

Für die Einstellung der Dauer der "Daten-squitter" und/oder der Mindestdauer des abzusendenden RF-Signals nach Aktivierung der PTT-Taste und/oder der Zeitdauer zwischen der Aktivierung der PTT-Taste und der Aufgabe der Daten auf die Audio-Sprachfrequenz können aufeinander abstimmbare Zeitglieder vorgesehen sein.

Die Zeitglieder befinden sich vorteilhafterweise in der Einheit 17, mit der die Übertragung der weiteren Daten, abhängig vom PTT-Signal gesteuert wird.

## Patentansprüche

1. Verfahren für die Übertragung von Nachrichten zwischen einem Sender und einem Empfänger, vorzugsweise zwischen auf Flugzeugen und in Bodenstationen befindlichen Sendern und Empfängern, wobei im Sender die Sprachdaten einer Sprachaufnahmeeinheit als AF-Signal erstellt und, vorzugsweise DSB-AM moduliert, von einer Sendeeinheit als RF-Signal abgesendet werden, wobei das Absenden einer Nachricht durch Aktivieren einer PTT-Taste eingeleitet wird und wobei im Empfänger eine Demodulation des empfangenen RF-Signals und eine Auswertung des AF-Signals erfolgt, **dadurch gekennzeichnet,**
- **dass** zur Erzielung einer mit der Übertragung der Sprachdaten gemeinsamen Übertragung von weiteren Daten im Sender eine Verknüpfung der zum Absenden vorgesehenen Sprachdaten mit den weiteren zu übertragenden Daten erfolgt,
- **dass** ein vorgegebener Teilbereich des AF-Sprachspektrums unterdrückt bzw. beseitigt, insbesondere mit einer Bandsperre, beseitigt wird und
- **dass** die zu übertragenden weiteren, insbesondere gespeichert vorliegenden, Daten in den frei gemachten Teil des AF-Sprachspektrums eingebettet und gemeinsam mit den Sprachdaten abgesendet werden.

2. Verfahren nach Anspruch 1, **dadurch gekennzeichnet, dass** die Unterdrückung des Teilbereiches ständig oder nach Drücken der PTT-Taste für eine vorgegebene Zeitspanne erfolgt und/oder dass die zu übertragenden weiteren Daten nach Drücken der PTT-Taste in den unterdrückten Teilbereich des AF-Sprachspektrums eingefügt werden.

3. Verfahren nach Anspruch 1 oder 2, **dadurch gekennzeichnet, dass** im Empfänger der die weiteren Daten enthaltende Teilbereich des AF-Sprachspektrums insbesondere mit einem auf diesen Teilbereich des AF-Sprachspektrums abgestimmten Bandpass-Filter ausgefiltert werden und/oder dass nach Ausfiltern der weiteren Daten das Trägersignal der weiteren Daten aus dem übertragenen AF-Signal, insbesondere mit einer Bandsperre, ausgefiltert wird.

4. Verfahren nach einem der Ansprüche 1 bis 3, **dadurch gekennzeichnet, dass** die Absendung des RF-Signals sofort oder erst nach einer einstellbaren Zeitspanne nach Aktivierung der PTT-Taste erfolgt bzw. eingeleitet wird, und/oder dass die Zeitspanne für die Aufmodulierung und/oder die Zeitspanne für die Absendung der weiteren Daten auf das bzw. mit dem RF-Sendesignal auf eine einstellbare Zeitspanne beschränkt wird.

5. Verfahren nach einem der Ansprüche 1 bis 4, **dadurch gekennzeichnet, dass** das PTT-Signal nach Aktivierung der PTT-Taste für eine einstellbare Zeitspanne aufrecht erhalten wird, die die vorgesehene Zeitspanne für die Aufgabe und Übertragung der weiteren Daten überschreitet, und/oder dass nach Ablauf der Zeitspanne, die für die Übertragung der weiteren Daten vorgesehen ist, bei noch andauernder Aktivierung der PTT-Taste die Übertragung bzw. das Absenden des RF-Signals weiter aufrecht erhalten wird.

6. Verfahren nach einem der Ansprüche 1 bis 5, **dadurch gekennzeichnet, dass** als aufzugebende bzw. zu übertragende weitere Daten Daten übertragen werden, welche Navigationsanweisungen für den Piloten eines Flugzeuges enthalten und/oder die von der mit dem Sender verbundenen Navigationseinrichtung des Flugzeuges stammen und die Position des Flugzeugs betreffen und/oder mit denen Betriebseinrichtungen einer Bodenstation aktivierbar sind, und/oder dass den weiteren Daten vor der Aufmodulierung bzw. der Übertragung eine Stop- und/oder Startsequenz und/oder Synchronisierungs- und/oder Steuerdaten, insbesondere für die Übertragung selbst, zugefügt werden.

7. Kommunikationseinrichtung bzw. Anordnung für die Übertragung von Nachrichten zwischen einem Sender (1) und einem Empfänger (2), vorzugsweise zwischen auf Flugzeugen und in Bodenstationen befindlichen Sendern und Empfängern, wobei im Sender (1) die Sprachdaten einer Sprachaufnahmeeinheit (4) als AF-Signal im AF-Sprachkanal erstellt und vorzugsweise DSB-AM moduliert von einer Sendeeinheit (5) als RF-Signal gesendet werden, wobei das Absenden einer Nachricht durch Aktivieren einer PTT-Taste (3) des Senders (1) eingeleitet bzw. vorgenommen wird und wobei im Empfänger (2) eine Demodulation des empfangenen RF-Signals und eine Auswertung des AF-Signals erfolgt, insbesondere zur Durchführung des Verfahrens nach einem der Ansprüche 1 bis 6, **dadurch gekennzeichnet,**
- **dass** zur Erzielung einer mit der Übertragung der Sprachdaten gemeinsamen Übertragung von weiteren Daten im Sender (1) zwischen der Sprachaufnahmeeinheit (4), z.B. Mikrofon, und der Sendeeinheit (5) eine Verknüpfungseinheit (6) für die Sprachdaten mit den zur Übertragung vorgesehenen weiteren Daten vorgesehen bzw. eingeschaltet ist und
- **dass** die Verknüpfungseinheit (6) einen Datenspeicher oder -generator (10) für die zu übertragenden weiteren Daten aufweist, diese weiteren Daten in einen vom AF-Sprachspektrum frei gemachten Teilbereich (8) des AF-Sprachspektrums (9) einbettet und das mit den weiteren Daten ergänzte AF-Sprachspektrum der Sendeeinheit (5) weiterleitet.

8. Kommunikationseinrichtung bzw. -anordnung nach Anspruch 7, **dadurch gekennzeichnet, dass** die Verknüpfungseinheit (6) eine Bandsperre (7) aufweist, mit der insbesondere mit dem Zeitpunkt oder innerhalb einer vorgegebenen Zeitspanne nach der Aktivierung der PTT-Taste (3) ein vorgegebener Teilbereich (8) des AF-Sprachspektrums (9) beseitigbar ist.

9. Kommunikationseinrichtung bzw. -anordnung nach Anspruch 7 oder 8, **dadurch gekennzeichnet, dass** im Empfänger (2) zwischen einer Empfangseinheit (11) für das RF-Signal und einer Sprachwiedergabeeinheit (12), z.B. Lautsprecher, eine Entnahmeeinheit (13) angeordnet bzw. eingeschaltet ist, die ein auf den vorgegebenen und beseitigten Teilbereich (8) des AF-Sprachspektrums (9) abgestimmtes Filter (14), insbesondere Bandpassfilter, aufweist, zur Ausfilterung des die weiteren Daten enthaltenden Teilbereiches (8) des AF-Sprachspektrums, wobei gegebenenfalls die Entnahmeeinheit (13) zur Unterdrückung des Trägersignals der weiteren Daten eine Bandsperre (15) für den die weiteren Daten enthaltenden Teilbereich (8) des AF-Sprachspektrums (9) aufweist.

10. Kommunikationseinrichtung bzw. -anordnung nach einem der Ansprüche 7 bis 9, **dadurch gekennzeichnet, dass** der Sender (1) ein Zeitglied (16) umfasst, mit dem die Dauer der Aufgabe der weiteren Daten auf den Teilbereich (8) des nach Aktivierung der PTT-Taste (3) abgesendeten RF-Signals und/oder die Zeitdauer des Teilbereiches (8) auf eine bestimmte Zeitspanne bzw. Mindestdauer, z.B. eine Sekunde, einstellbar bzw. beschränkbar ist, und/oder dass der Sender (1) ein Zeitglied (17) zur Vorgabe einer einstellbaren Mindestsendedauer für das nach Aktivierung der PTT-Taste (3) abgesendete RF-Signal aufweist.

11. Kommunikationseinrichtung bzw. -anordnung nach einem der Ansprüche 7 bis 10, **dadurch gekennzeichnet,**
- **dass** im Flugzeug ein Datenspeicher (10) mit Daten betreffend die Identifikation des Flugzeugs und/oder das Flugzeug betreffende Daten enthalten ist, der an die Verknüpfungseinheit (6) angeschlossen ist, wobei dieser Datenspeicher (10) vorzugsweise den ICAO 24-Bit Code des Flugzeuges enthält, und/oder
- **dass** der Verknüpfungseinheit (6) in einer Bodenstation ein Datenspeicher (10) zugeordnet ist, der einen Identifizierungscode für die Bodenstation und/oder zumindest einen Fluglotsen enthält, und/oder
- **dass** der Frequenzbereich des unterdrückten Teilbereiches des Sprachspektrums zwischen 1,5 bis 2,5 kHz, vorzugsweise 1,8 bis 2,3 kHz, liegt und/oder
- **dass** die Bandbreite des unterdrückten Teilbereiches 200 bis 400 Hz, vorzugsweise 280 bis 220 Hz, beträgt.

12. Verwendung eines Verfahrens nach einem der Ansprüche 1 bis 6 und/oder einer Kommunikationseinrichtung bzw. -anordnung nach einem der Ansprüche 7 bis 11 für die Nachrichtenübertragung zwischen Flugzeugen und Bodenstation.
